# EUROPÄISCHE PATENTSCHRIFT

(11) **EP 0 500 557 B1**
(45) Veröffentlichungstag und Bekanntmachung des Hinweises auf die Patenterteilung: **29.12.1993**
(21) Anmeldenummer: 90914899.1
(22) Anmeldetag: 16.10.1990
(51) Int. Cl.: B60R 16/02

(54) **MULTIPLEX-SCHALTUNGSANORDNUNG, INSBESONDERE FÜR DIE ANSTEUERUNG VON VERBRAUCHER-STATIONEN IN KRAFTFAHRZEUGEN**
MULTIPLEX CIRCUIT ARRANGEMENT, IN PARTICULAR FOR CONTROLLING CONSUMER STATIONS IN MOTOR VEHICLES
CIRCUIT MULTIPLEX, NOTAMMENT POUR COMMANDER DES POSTES CONSOMMATEURS DANS DES VEHICULES A MOTEUR

(30) Priorität: 06.11.1989 DE 3936894
(43) Veröffentlichungstag der Anmeldung: 02.09.1992
(73) Patentinhaber: ROBERT BOSCH GMBH, 70442 Stuttgart (DE)
(72) Erfinder: SCHMID, Johann, D-7251 Hemmingen (DE)
(86) Internationale Anmeldenummer: DE9000784
(87) Internationale Veröffentlichungsnummer: WO9106447

(56) Entgegenhaltungen:
- DE-A- 3 149 142
- DE-A- 3 730 468
- FR-A- 2 078 336
- FR-A- 2 549 617
- US-A- 4 001 524
- Electron. & Applic. Ind., Nr. 262, 15. Januar 1979; P. Breteau: Transmission analogique bidirectionnnelle", Seiten 51-52
- Electronic Engineering, Band 55, Nr. 675, März 1983, (London, GB), P.E. Phillips et al.: "Bus ystems in the car", Seiten 134-144
- Ingénieurs de l'automobile, Nr. 8, November 1984, (Paris, FR), P.-J. Salvay et al.: "Electronique automobile, réalités et promesses" - "Le multiplexage Lucas", Seiten 71-78

## Beschreibung

Die Erfindung richtet sich auf eine Multiplex-Schaltungsanordnung, insbesondere für die Ansteuerung von Verbraucher-Stationen in Kraftfahrzeugen, gemäß dem Oberbegriff von Anspruch 1.

Eine solche gattungsgemäße Schaltungsanordnung ist z.B. aus der DE 37 3o 468 A1 bekannt. Diese Schaltungsanordnung weist eine Sternstruktur auf, wobei sich der eigentliche Sternpunkt aber über praktisch die ganze Fahrzeuglänge erstreckt. Hieraus resultiert ein wesentlicher Nachteil, weil eine Beschädigung der zentralen Datenleitung zu einem Totalausfall des Systems führen kann. Die große örtliche Erstreckung des Sternpunkts wurde in dieser Druckschrift auch bereits als problematisch erkannt. Ein weiterer Nachteil der vorbekannten Anordnung ist darin zu sehen, daß ein großer schaltungstechnischer Aufwand für die einzelnen Stationen erforderlich ist. Es sind dort jeweils Steuergeräte mit Microprozessoren und entsprechender Software, Datenumsetzer, Datenaufbereiter und Busübertrager erforderlich, wobei die Funktion dieser Teilnehmerstationen letztendlich nur darin besteht, eine Entkopplung der einzelnen Schnittstelleneinheiten zu realisieren.

Aus der DE 31 49 142 A1 ist eine Schaltungsanordnung mit einer relativ komplizierten, mit zwei Rechnern bestückten Zentralstation bekannt. Diese Schaltungsanordnung arbeitet nach dem Master-Slave-Prinzip, worin auch ihr hauptsächlicher Nachteil zu sehen ist. Bei neuzeitlichen Anordnungen wird nichts mit einer Zentralelektronik, sondern mit einem gleichberechtigten Verbund (Multi-Master-Prinzip) gearbeitet. Außerdem wird bei diesem Stand der Technik jede Unterverteilung sternförmig mit einer separaten Leitung angefahren, was nachteilig ist, da im Kraftfahrzeugbereich davon auszugehen ist, daß es eine Mehrzahl von Unterverteilungen z.B. für die vier Türen, die vier Fahrzeugecken, die Klimaanlage, die Sitzverstellung, das Schiebedach, an verschiedenen Stellen des Motorraums, an der Mittelkonsole usw. geben wird. Gemäß dem vorbekannten System dürfen keine zwei derartige Unterverteilungen an eine Datenleitung geschaltet werden, wenn deren gegenseitige Entkopplung gewährleistet sein soll. Müssen Daten zwischen zwei Unterverteilungen ausgetauscht werden, kann dies nur über einen Zwischenstop in der Zentraleinheit geschehen, also z.B. bei einer Übertragung von Bedientasten im Rücksitzbereich zur Betätigung eines Türfensters.

Hiervon ausgehend liegt der Erfindung die Aufgabe zugrunde, eine Schaltungsanordnung der eingangs genannten Art so auszugestalten, daß eine günstige Verteilung der Lastleitungen erzielt wird, welche über einen zentralen Sicherungskasten abgesichert werden können, wobei bei Realisierung einer Sternstruktur der Zentralbereich örtlich begrenzt realisierbar sein soll. Weiterhin soll eine Ankopplung an jede vorhandene Datenleitung über ein Netzwerk möglich sein, ohne daß hierdurch Einbußen bei der Entkopplung bedingt sind. Jede Station soll mit jeder anderen ohne Umschaltvorgänge und ohne Datentransfer über einen Microprozessor kommunizieren können, wobei jeweils die Nachricht mit der höchsten Priorität übertragen wird. Letztlich soll es noch möglich sein, weitere Teilnehmerstationen ohne Auswirkung auf das Restsystem an das Netzwerk unter Zuteilung von Adressen an jede einzelne Station anzuschalten.

Diese Aufgabe wird erfindungsgemäß gelöst durch eine Schaltungsanordnung mit den Merkmalen von Anspruch 1.

Durch die danach vorgesehene Lösung wird erreicht, daß bei einem Kurzschluß einer Datenleitung gegen Masse oder Plus ebenso wie beim Ausfall einer Treiberstation nicht das gesamte System funktionsunfähig wird, da jeder Zweig des Netzes entkoppelt ist. Der passive Zustand des Netzwerkes kann der Low-Pegel sein, wobei ein an einer Stelle angelegter High-Pegel an alle andere Stationen vermittelt wird. Durch den endseitigen Abschluß jeder Datenleitung wird das Abstrahlverhalten minimiert. Das gesamte System weist ein Tiefpaßverhalten mit veränderbarer Eckfrequenz auf, wodurch einer HF-Einstrahlung entgegengewirkt werden kann.

Die erfindungsgemäß vorgesehene zentrale Busverteileranordnung ermöglicht es, diesen Zentralbereich bei einer Sternkonfiguration örtlich stark zu beschränken und damit dessen Anfälligkeit gegen Beschädigungen und damit gegen Störungen des Gesamtsystems wesentlich zu reduzieren.

Erfindungsgemäß kann also eine freilaufende, bidirektionale Verteilerstation aufgebaut werden, ohne daß eine zentrale Steuerlogik für Empfangen bzw. Senden notwendig ist, wohingegen bei herkömmlichen digitalen Bustreibern stets zwischen Empfang und Senden umgeschaltet werden muß.

Jede Datenleitung ist an beiden Enden hinsichtlich ihres Widerstandes anpaßbar. Es kann ein gewünschter leitungsspezifischer Widerstand eingestellt werden, was sich beim Abstrahlverhalten vorteilhaft bemerkbar macht. Die Sendeverstärker können mit einem definierten Ausgangswiderstand aufgebaut werden.

Aus dem Vorstehenden ergibt sich, daß sich eine erfindungsgemäße Schaltungsanordnung insbesondere für eine Sternstruktur eignet. Im Prinzip und unter Wahrung der grundsätzlichen Vorteile kann auch ein ringförmiges oder T-förmiges Netzwerk aufgebaut werden.

In weiterer Ausgestaltung der Erfindung ist für den Fall einer Sternstruktur die Ausgestaltung nach Anspruch 2 vorgesehen, welche die Unterbringung der Schmelzsicherungen in einem zentralen Sicherungskasten ohne erheblichen zusätzlichen Leitungsaufwand ermöglicht.

Die Ausgestaltung der Leitungen nach Anspruch 3 trägt dem Umstand Rechnung, daß die Datenleitung einen nur erheblich kleineren Querschnitt aufzuweisen braucht als die Lastleitung.

Eine gemäß Anspruch 4 vorgesehene Unterverteilungs-Anordnung kann bis zu 3o m entfernt vorgesehen sein und übernimmt beispielsweise die Daten-Last-Verteilung im Heck eines Kraftfahrzeugs.

Die Ansprüche 5 bis 7 geben vorteilhafte schaltungstechnische Ausgestaltungen an, welche in Verbindung mit der Beschreibung eines Ausführungsbeispiels noch erläutert werden.

Nachfolgend wir die Erfindung anhand eines Ausführungsbeispiels im Zusammenhang mit der Zeichnung näher beschrieben. Dabei zeigen
- Fig. 1: ein Prinzipschaltbild einer erfindungsgemäßen Schaltungsanordnung,
- Fig. 2: eine Datenleitung mit an beiden Enden angeordneten Busankopplungsnetzwerken gemäß dem Ausschnitt II in Fig. 1,
- Fig. 3: einen Schnitt durch ein in der Schaltungsanordnung nach Fig. 1 verwendetes Kabel und
- Fig. 4: eine detailliertere Darstellung des Schaltungsausschnitts nach Fig. 2.

Eine erfindungsgemäße Multiplex-Schaltungsanordnung umfaßt eine Mehrzahl von Verbraucherstationen VS1 - VS8 umfassend jeweils einen Hardware-Prozessor zum schnellen seriellen Datenaustausch (CAN), welche über Leitungen L1 - L6 mit einer zentralen Busverteileranordnung ZVA verbunden sind. Ein derartiger Hardware-Microprozessor (CAN) wird z.B. in der Zeitschrift "Elektronik-Informationen" 3, 88, Seiten 46 f.f., naher beschrieben.

An den Enden der Leitungen L1 - L8 sind jeweils Busankopplungsnetzwerke vorgesehen, und zwar auf seiten der Verbraucherstationen VS1 - VS8, Stationsnetzwerke SN1 - SN8 und seitens der zentralen Verteileranordnung ZVA Verteilernetzwerke VN1 - VN9. Die Stationsnetzwerke SN und die Verteilernetzwerke VN, welche als Busankopplungsnetzwerke verwendet werden, sind analog aufgebaut. Die Verteilernetzwerke VN7 - VN9 sind als Unterverteilungsanordnung UVA zusammengefaßt, welche z.B. für die Signal-Last-Verteilung im Heck eines Kraftfahrzeugs sorgen kann.

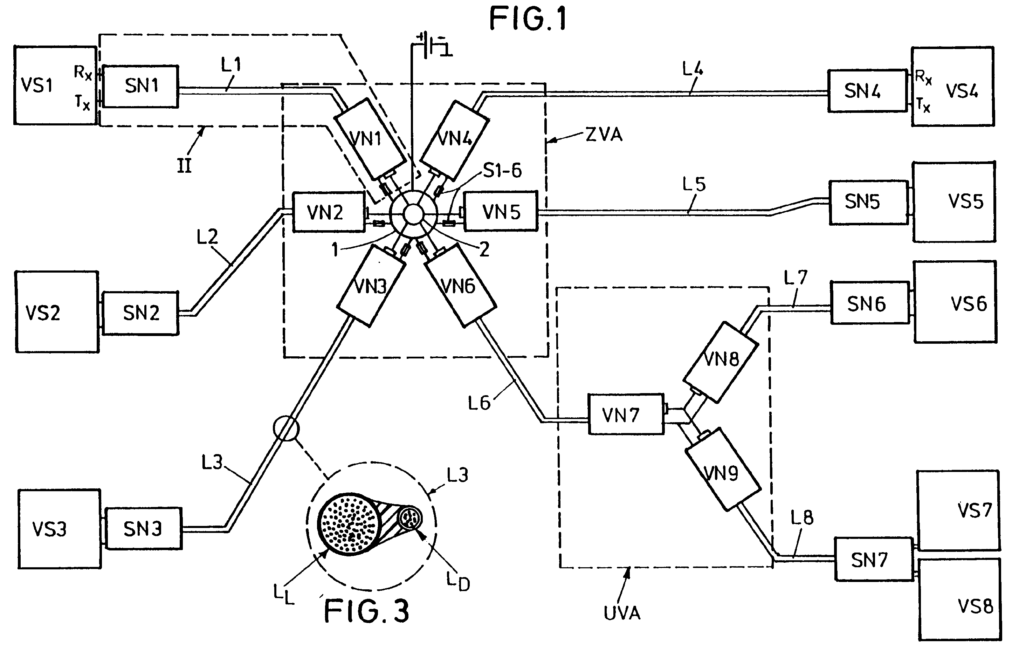

Im Ausführungsbeispiel gemäß Fig. 1 ist eine sternförmige Netzstruktur dargestellt, bei welcher der Sternknotenpunkt umfassend die Verteilernetzwerke VN1 - VN6 in einem kleinen räumlichen Bereich, z.B. auf einer Platine, angeordnet werden kann. Die Lastleitungen L_{L} sind vor ihrer Einmündung in den Sternkreuzpunkt mit den Ringleitungen 1 und 2 über Schmelzsicherungen S1 - S6 abgesichert, welche in einem zentralen Sicherungskasten 4 untergebracht sind.

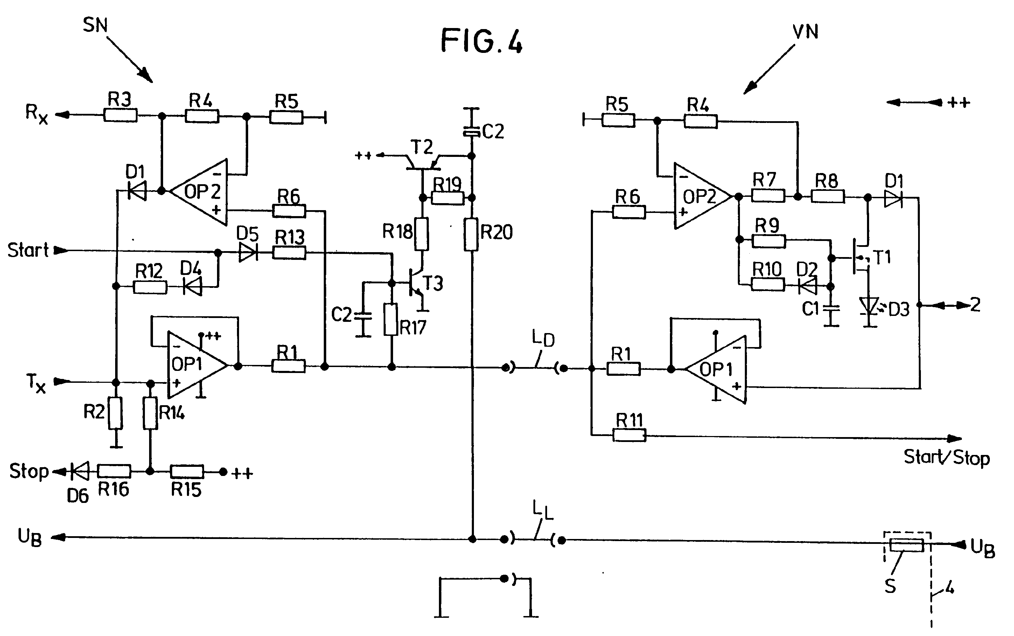

Jede der Leitungen L1 - L8 ist als in Fig. 3 im Schnitt dargestelltes zweiadriges Kabel umfassend eine im Querschnitt größere Lastleitung L_{L} und eine im Querschnitt kleinere Datenleitung L_{D} ausgebildet.

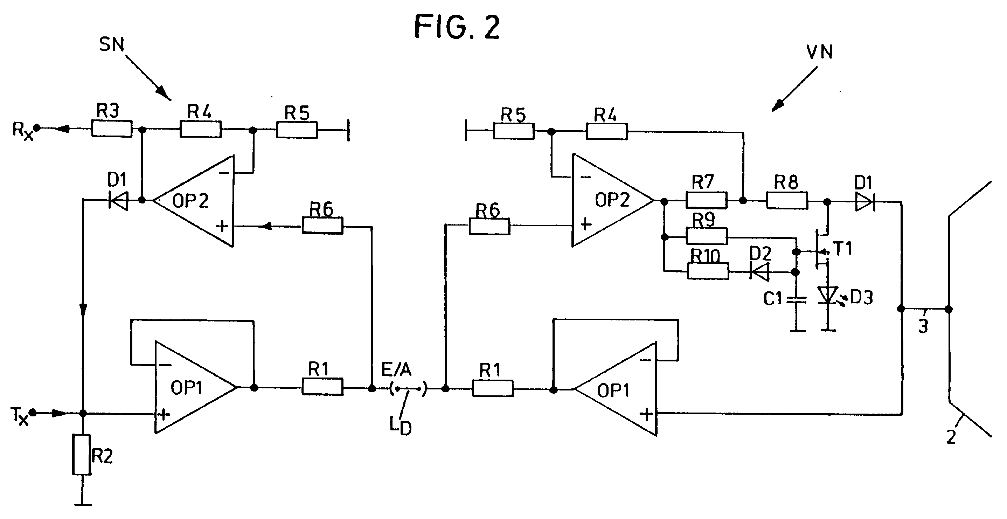

Jedes in Fig. 2 bzw. 4 im einzelnen dargestellte Stationsnetzwerk SN bzw. Verteilernetzwerk VN umfaßt zwei gegensinnig geschaltete Analogverstärker OP1 bzw. OP2. Dem Analogverstärker OP1 ist ausgangsseitig ein Ausgangswiderstand R1 nachgeschaltet, der mit seiner anderen Seite über einen Widerstand R6 am Eingang (+) des Analogverstärkers OP2 liegt. Der Eingang (-) des Analogverstärkers OP2 ist über einen Widerstand R5 mit Masse und über einen Widerstand R4 mit dem Ausgang des Analogverstärkers OP2 bzw. über einen weiteren Widerstand R3 mit dem Ausgang Rₓ zu der Verbraucherstation VS verbunden.

Der Eingang (-) des Analogverstärkers OP1 ist direkt mit dem Ausgang verbunden. Der Eingang (+) ist über einen Widerstand R2 einerseits mit Masse, über eine in Sperr-Richtung geschaltete Diode D1 mit dem Ausgang des Analogverstärkers OP2 und mit dem Eingang Tₓ zu der Verbraucherstation VS verbunden.

Über die insoweit übereinstimmende Ausgestaltung abgesehen von der Verbindung mit der Verbraucherstation hinaus ist bei den Verteilernetzwerken VN vorgesehen, daß an der Ausgangsseite des Analogverstärkers OP2 zwischen dessen Ausgang und der Diode D1 zwei in Reihe geschaltete Widerstände R7,R8 vorgesehen sind, zwischen welchen die Leitung zu dem Eingang (-) des Analogverstärkers OP2 über den Widerstand R4 mündet, wobei ein Transistor T1 vorgesehen ist, welcher über die Kollektor-Emitter-Strecke zwischen dem Widerstand R8 und der Diode D1 einerseits und über eine Leuchtdiode D3 andererseits an Masse liegt, und dessen Basis einerseits über den Widerstand R9 und andererseits über den Widerstand R1o und die Diode D2 mit dem Ausgang des Analogverstärkers 2 sowie über einen Kondensator C1 mit Masse verbunden ist. Die Verbindung mit der Ringleitung 2 des Sternpunktes erfolgt über eine Leitung 3, welche zwischen der Diode D1 und dem Eingang (+) des Verstärkers OP1 mündet. Die Datenleitung L_{D} mündet am freien Ende des Widerstandes R1 bzw. R6. Die Widerstände R7 - R1o und der Kondensator C1 bilden ein RC-Glied, welches den Schaltpunkt des Transistors T1 festlegt.

Die erfindungsgemäße Schaltungsanordnung arbeitet wie folgt:

Im Ruhezustand liegt an allen Ein- und Ausgängen Tₓ, Rₓ, E/A Low-Signal, was dem passiven Pegel entspricht.

Die Schleifenverstärkung der Schaltung Tₓ-OP1-R1-R6-OP2-D1 ist kleiner als 1. Der Sendeaus gang Tx der Verbraucherstation VS bzw. des dort vorgesehenen Hardware-Prozessors weist eine Open-Drain-Schaltung (Open-Kollektor) auf.

Die Diode D1 sorgt für eine sogenannte "Wired-Or-Struktur" des Netzwerkes, d.h. nur der High-Pegel (dominant bit) wird aktiv eingekoppelt. Der Verstärkungsfaktor des Analogverstärkers OP2 wirkt einer zu großen Dämpfung durch die Diode D1 entgegen, so daß sich eine Schleifenverstärkung von knapp kleiner als 1 einstellen läßt, welche erforderlich ist.

Der Sendevorgang läuft wie folgt ab:

Über den Open-Drain-Ausgang Tₓ wird niederohmig ein High-Pegel 5V angelegt. Vom Ausgang des Analogverstärkers OP1 (Impedanzwandler) gelangt das Signal über den Anpaßwiderstand R1 auf die Datenleitung L_{D} und gleichzeitig über den Analogverstärker OP2 zurück auf den Empfängereingang Rx. Sendet der Ausgang Tx ein Low-Signal, d.h. wird Tx hochohmig, bricht auch die Spannung im Netzwerk zusammen (Schleifenverstärkung <1).

Der Empfangsvorgang läuft wie folgt ab:

Ausgehend von der Umkehrung des vorstehend beschriebenen Sendevorgangs wird angenommen, daß ein High-Signal von der Datenleitung L_{D} über E/A kommend auf das Verbraucher-Stationsnetzwerk SN gelangt. Der Analogverstärker OP1 führt zu diesem Augenblick noch Low-Signal, d.h. die Signalspannung fällt über R1 ab. Diese Spannung wird über den Analogverstärker OP2 auf den Eingang des Analogverstärkers OP1 zurückgeführt. Dessen Ausgang wird hochgesteuert, was zu einem weiteren Anstieg der Signalspannung am Eingang des Empfängers, d.h. des Analogverstärkers OP2 führt. Ein- und Ausgangsverstärker OP2 bzw. OP1 schieben sich also gegenseitig hoch, sobald auf der Datenleitung ein ansteigendes Signal liegt. Die Anstiegsgeschwindigkeit der Signale ist durch die "Slew Rate" der Analogverstärker OP1 bzw. OP2 definiert. Fällt das Signal wieder ab, bricht auch die Spannung im Netzwerk SN zusammen (Schleifenverstärkung <1). Die Dynamik der abfallenden Flanke hängt außer von der Schleifenverstärkung auch noch von der RC-Charakteristik des Netzwerkes ab, welche durch den Widerstand R2 beeinflußt werden kann.

Aufgrund des analogen Aufbaus funktioniert jedes Verteilernetzwerk VN entsprechend. D.h. ausgehend von dem Ausgang Tx und über den Analogverstärker OP1 gelangt das Signal zum Verteilernetzwerk VN, welches als Empfänger arbeitet und das Signal in die Leitung 2 im Kernbereich der Sternstruktur einkoppelt. Alle anderen Verteilernetzwerke VN der zentralen Verteileranordung ZVA wirken dann als Sender und leiten das Signal weiter zu den übrigen Verbraucherstationen VS. Dort fungieren die jeweiligen Stationsnetzwerke SN wieder als Empfänger.

Zur Anpassung der Datenleitungen L_{D} ist jeweils ein niederohmiger Impedanzwandler Ra kleiner als lo Ohm auf beiden Seiten der Datenleitung L_{D} vorgesehen, der zusammen mit dem Widerstand R1 für eine genaue Anpassung sorgt.

Hinsichtlich der Entkopplung des Bussystems muß man zwischen zwei möglichen Fehlerarten unterscheiden:

Kurzschlüsse gegen Masse sind im Hinblick auf den Grundaufbau bzw. die Grundfunktion des Systems unkritisch. Die Diode D1 im Verteilernetzwerk VN blockt jedes Massesignal aus der zugehörigen Zweigleitung L vom restlichen Bussystem ab.

Hinsichtlich möglicher Kurzschlüsse gegen Plus ist der durch die Widerstände R7 - R1o, den Kondensator C1, die Diode D2, den Transistor T1 und die Diode D1 gebildete Schaltungsteil in den Verteilernetzwerken VN vorgesehen.

Dieser Schaltungsteil funktioniert so, daß ein stetiges High-Signal an der Anode der Diode D1, hervorgerufen durch einen Kurzschluß der Datenleitung L_{D} gegen Plus, einen defekten Analogverstärker oder einen zerstörten Hardware-Prozessor (CAN) das Bussystem an sich außer Funktion setzen würde. Dem wirkt nun der Transistor T1 mit Hilfe des Integrators umfassend den Widerstand R9 und den Kondensator C1 entgegen. Entsprechend der Integrator-Zeitkonstante wird der Transistor T1 leitend und schließt damit das statische High-Signal gegen Masse kurz. Entkoppelt durch die Diode D1 kann das restliche Bussystem ungestört weiterarbeiten. Die Kombination des Widerstands R1o mit der Diode D2 sorgt für ein schnelles Zuschalten des Zweiges, falls ein derartiger Fehler nur kurzzeitig auftritt. Die Widerstände R7 und R8 schützen bei einem derartigen Störfall den Analogverstärker OP2 vor Überlastung und wirken einer Schwingneigung entgegen.

Eine vorstehend beschriebene Schaltungsanordnung wird vorzugsweise so betrieben, daß ein Start-Stop-Modus vorgesehen ist, d.h. das Bussystem soll im Parkzustand abgeschaltet und beim Betätigen irgendeiner Fahrzeugfunktion wieder gestartet werden.

In Fig. 4 ist die im Zusammenhang mit Fig. 2 oben näher beschriebene Schaltungsanordnung in erweiterter Form dargestellt:

Mit Hilfe eines Spannungsteilers gebildet durch die Widerstände R2,R14 und R15 wird der Spannungspegel für das Low-Signal auf 1,5 V angehoben. Diese Spannung wird über den Widerstand R17 durch den Transistor T3 überwacht. Der Transistor T2 wird von dem Transistor T3 durchgeschaltet, und damit wird das Netzwerk mit Strom versorgt.

Soll das Bussystem abgeschaltet werden, müssen alle Verbraucherstationen VS gleichzeitig ein Stop-Signal anlegen. Das Potential für das Low-Signal wird dann über den Widerstand R16 auf Masse gezogen, die Transistoren T2 und T3 sperren die Stromversorgung und schalten damit das Netzwerk ab.

Ein analoger Vorgang findet in allen anderen Verbraucherstationen VS statt, so daß die Versorgungsspannung der zentralen Verteileranordnung ZVA über die Widerstände R11 ebenfalls abgeschaltet wird. Das gesamte Bussystem ist damit spannungslos, d.h. die Wegnahme des Stop-Signals hat keine Auswirkung.

Jede Verbraucherstation VS kann durch einen Start-Befehl das gesamte Bussystem wieder wecken. Dabei wird zuerst über die Diode D5 und den Widerstand R13 das eigene Netzwerk eingeschaltet und praktisch gleichzeitig über die Diode D4 und den Widerstand R12 ein High-Signal ausgesendet. Dieses Signal startet über den Widerstand R11 die Stromversorgung der zentralen Verteileranordnung ZVA, wird sodann zu allen anderen Verbraucherstationen VS weitergeleitet und bewirkt über den Widerstand R17 den Start aller Stationen.

## Patentansprüche

1. Multiplex-Schaltungsanordnung, insbesondere für die Ansteuerung von Verbraucherstationen in Kraftfahrzeugen, wobei jede Station einen Hardware-Prozessor zum schnellen, seriellen Austausch von Daten (CAN) und eine Treiberschaltung aufweist, umfassend ein mit einem aktiven und passiven Pegel arbeitendes Bussystem, wobei die einzelnen Stationen über eine Netzwerkstruktur, insbesondere eine Sternstruktur, verbunden sind, dadurch gekennzeichnet, daß jede Datenleitung (L_{D}) endseitig je ein bidirektionales Buskoppelnetzwerk (Stationsnetzwerk SN bzw. Verteilernetzwerk VN) umfassend zwei gegensinnig geschaltete Analogverstärker (OP1,OP2) aufweist, wobei zumindest mehrere zentrale Buskoppelnetzwerke (Verteilernetzwerke VN) zu einer sternförmigen zentralen Busverteileranordung (ZVA) zusammengefaßt sind.

2. Multiplex-Schaltungsanordnung nach Anspruch 1, dadurch gekennzeichnet, daß für die Lastleitungen (L_{L}) die Last-Sicherungen (S) in der zentralen Verteileranordnung (ZVA) vorgesehen sind.

3. Multiplex-Schaltungsanordnung nach Anspruch 1, dadurch gekennzeichnet, daß die Leitungen (L) zu den einzelnen Verbraucherstationen (VS) als unsymmetrische, zweiadrige Leitungen ausgestaltet sind.

4. Multiplex-Schaltungsanordnung nach Anspruch 1, dadurch gekennzeichnet, daß wenigstens eine Unterverteilungsanordnung (UVA) zur Daten-Last-Verteilung umfassend eine Mehrzahl von Verteilernetzwerken (VN) vorgesehen ist.

5. Multiplex-Schaltungsanordnung nach Anspruch 1, dadurch gekennzeichnet, daß dem Ausgang des ersten Analogverstärkers (OP1), der als Impedanzwandler wirkt, ein Anpassungswiderstand (R1) nachgeschaltet ist.

6. Multiplex-Schaltungsanordnung nach Anspruch 1, dadurch gekennzeichnet, daß dem Ausgang des zweiten Analogverstärkers (OP2) eine Diode als Schutzmaßnahme gegen Kurzschlüsse gegen Minus nachgeschaltet ist.

7. Multiplex-Schaltungsanordnung nach Anspruch 1, dadurch gekennzeichnet, daß zwischen dem Ausgang des zweiten Analogverstärkers (OP2) und der Diode (D1) eine Schutzschaltung gegen Kurzschlüsse gegen Plus umfassend einen Transistor (T1), eine Diode (D3), einen Integrator (R7 - R1o; C1) und eine Diode (D2) vorgesehen ist, wobei der Transistor (T1) entsprechend der Zeitkonstanten des Integrators (R7 - R1o; C1) ein statisches High-Signal gegen Masse kurzschließt.

## Claims

1. Multiplex circuit arrangement, in particular for driving load stations in motor vehicles, each station having a hardware processor for quick, serial exchange of data (CAN) and a driver circuit, comprising a bus system operating with an active and passive level, the individual stations being connected via a network structure, in particular a star structure, characterized in that each data line (L_{D}) has at the end one bidirectional bus coupling network (station network SN and distribution network VN, respectively) each comprising two analog amplifiers (OP1, OP2) connected in opposition, at least a plurality of central bus coupling networks (distribution networks VN) being combined to form a star-shaped central bus distribution arrangement (ZVA).

2. Multiplex circuit arrangement according to Claim 1, characterized in that the load fuses (S) are provided for the load lines (L_{L}) in the central distribution arrangement (ZVA).

3. Multiplex circuit arrangement according to Claim 1, characterized in that the lines (L) to the individual load stations (VS) are constructed as asymmetrical, two-wire lines.

4. Multiplex circuit arrangement according to Claim 1, characterized in that at least one subdistribution arrangement (UVA) is provided for data/load distribution comprising a multiplicity of distribution networks (VN).

5. Multiplex circuit arrangement according to Claim 1, characterized in that a matching resistor (R1) is connected downstream of the output of the first analog amplifier (OP1), which acts as an impedance transformer.

6. Multiplex circuit arrangement according to Claim 1, characterized in that a diode is connected downstream of the output of the second analog amplifier (OP2) as a protective measure against short circuits with respect to negative.

7. Multiplex circuit arrangement according to Claim 1, characterized in that there is provided between the output of the second analog amplifier (OP2) and the diode (D1) a protective circuit against short circuits with respect to positive, comprising a transistor (T1), a diode (D3), an integrator (R7-R10; C1) and a diode (D2), the transistor (T1) short-circuiting a static high signal with respect to frame in accordance with the time constant of the integrator (R7-R10; C1).

## Revendications

1. Circuit multiplex, notamment pour la commande des postes utilisateurs de véhicules automobiles, chaque poste ayant un processeur câblé pour l'échange rapide en série de données (CAN) et un circuit d'entraînement, avec un système de bus travaillant avec un niveau actif et un niveau passif, les différents postes étant reliés par une structure de réseau, notamment une structure en étoile, circuit caractérisé en ce que chaque ligne de données (L_{D}) possède à une extrémité, un réseau de bus de couplage bidirectionnel (réseau de station SN ou réseau de distributeur VN) comprenant deux amplificateurs analogiques (OP1, OP2) branchés en opposition, au moins plusieurs réseaux de couplage de bus, centraux, (réseau de distributeur VN) étant regroupés suivant un circuit de distributeur de bus central en étoile (ZVA).

2. Circuit multiplex selon la revendication 1, caractérisé en ce que pour les lignes de charge (L_{L}), il y a des fusibles de charge (S) dans le circuit distributeur central (ZVA).

3. Circuit multiplex selon la revendication 1, caractérisé en ce que les lignes (L) sont réalisées sous la forme de lignes à deux brins asymétriques vers les différents postes utilisateurs (VS).

4. Circuit multiplex selon la revendication 1, caractérisé par au moins un circuit de sous-distribution (UVA) pour la distribution données-charge comprenant plusieurs réseaux distributeurs (VN).

5. Circuit multiplex selon la revendication 1, caractérisé par une résistance adaptatrice (R1) branchée sur la sortie du premier amplificateur analogique (OP1) fonctionnant comme convertisseur d'impédance.

6. Circuit multiplex selon la revendication 1, caractérisé par une diode constituant un moyen de protection contre les courts-circuits vis-à-vis de la ligne négative, branchée sur la sortie du second amplificateur analogique (OP2).

7. Circuit multiplex selon la revendication 1, caractérisé en ce qu'entre la sortie du second amplificateur analogique (OP2) et la diode (D1) il est prévu un circuit de protection contre les courts-circuits vers la ligne positive, circuit comprenant un transistor (T1), une diode (D3), un intégrateur (R7-R10 ; C1) et une diode (D2), le transistor (T1) court-circuitant à la masse un signal statique haut en fonction des constantes de temps de l'intégrateur (R7-R10 ; C1).
